# EUROPEAN PATENT APPLICATION

(11) **EP 1 867 893 A2**
(43) Date of publication of application: **19.12.2007**
(21) Application number: 07011513.4
(22) Date of filing: 12.06.2007
(51) Int. Cl.: F16G 5/18

(54) **Power transmission chain, and power transmission device having the same**

(30) Priority: 15.06.2006 JP 2006166555
(71) Applicant: JTEKT CORPORATION, Chuo-ku Osaka-shi Osaka 542-8502 (JP)
(72) Inventor: Kuster, Joel, Osaka-shi Osaka 542-8502 (JP); Tada, Seiji, Osaka-shi Osaka 542-8502 (JP); Kamamoto, Shigeo, Osaka-shi Osaka 542-8502 (JP)
(74) Representative: Hager, Thomas Johannes

(57) **Abstract**

A chain is made by connecting a plurality of link modules. Each link module (40) includes first to third link units (51,52,53) adjoining in a chain advancing direction. Each of the first to third link units (51,52,53) includes seven links arranged in a chain width direction. The links are arrayed sequentially in the following order from one end with respect to a chain width direction, if the links of the first link unit is expressed by "1", if the links of the second link unit is expressed by "2" and if the links of the third link unit is expressed by "3":
[1, 3, 2, 2, 3, 2, 1, 3, 2, 1, 3, 2, 1, 3, 2, 1, 3, 1, 1, 3, 2].

## Description

### BACKGROUND OF THE INVENTION

### 1. Field of the Invention

The present invention relates to a power transmission chain and a power transmission device equipped with the power transmission chain.

### 2. Related Art

An endless power transmission chain to be used of a power transmission device such as a continuously variable transmission (CVT) of an automobile is constituted (as referred to JP-A-8-312725, for example) by making one link unit of a plurality of links arrayed in a chain width direction, by arraying the link units in a chain advancing direction, and by connecting the links of the link units adjoining in the chain advancing direction to each other by connecting members composed of a pair of pins or the like.

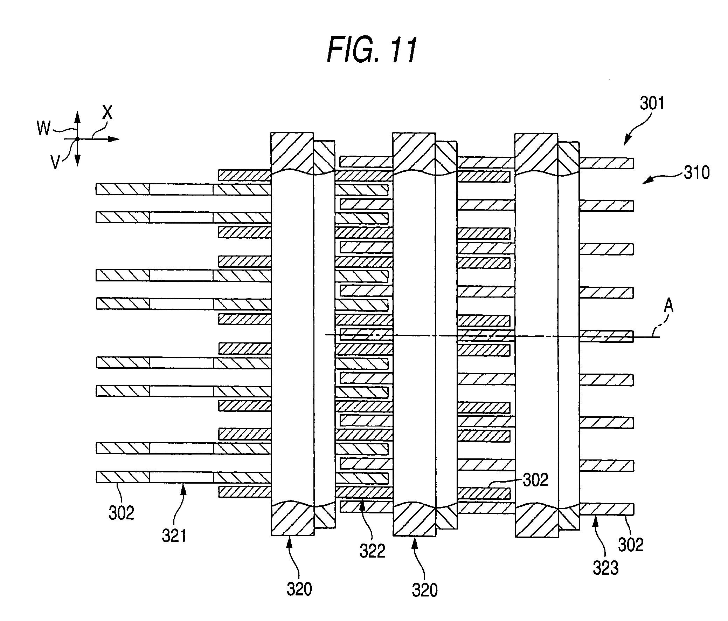

Fig. 11 is a sectional view of an essential portion of a power transmission chain of the prior art, as disclosed in JP-A-8-312725. With reference to Fig. 11, a power transmission chain 301 has a link module 310 as a unit element of the chain 301, and is constituted by linking the link modules 310 in a chain advancing direction X (although only one link module 310 is shown in Fig. 11).

The link module 310 is constituted to include: a first link unit 321 having eight links 302; a second link unit 322 having eight links 302; a third link unit 323 having nine links 302; and connecting members 320 for connecting the adjoining link units to each other. In each of the first, second and third link units 321 to 323, the links 302 are arranged symmetrically with respect to a center line A extending the center of a chain width direction W.

In this constitution, however, the numbers of the links 302 of the individual link units 321 to 323 are not equal such as eight and nine. As a result, the load on one link in the first or second link unit 321 or 322 and the load on one link in the third link unit 323 are different from each other. In this case, the allowable transmission torque or the like is determined with reference to the strength determined by the first or second link unit 321 or 322, which receives a higher load for each link because it has less links. Here, it is conceivable that the thickness of each link 302 is increased to improve the strength of the chain 301 thereby to increase the allowable transmission torque. However, this concept leads to an increase in the size of the power transmission chain 301.

### SUMMARY OF THE INVENTION

The present invention has been conceived in view of the background thus far described, and has an object to provide a power transmission chain capable of improving an allowable transmission torque and a durability without enlarging the size, and a power transmission device equipped with the power transmission chain.

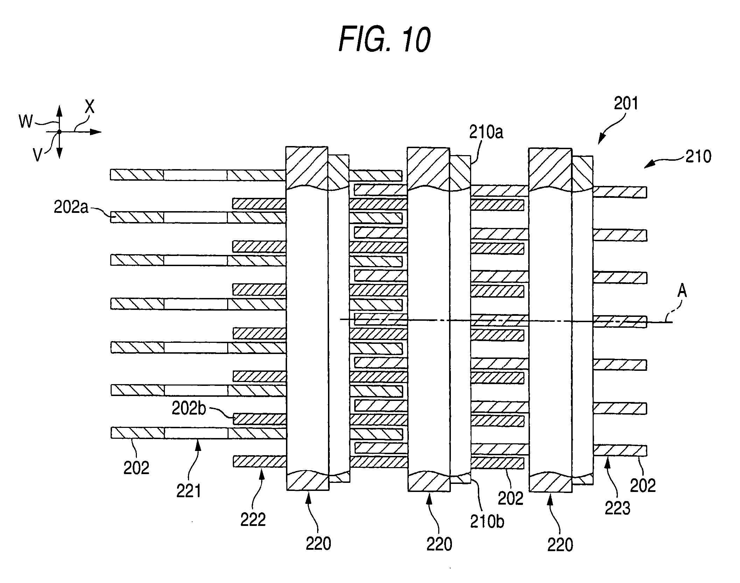

We have keenly investigated to conceive a power transmission chain 201, shown in Fig. 10, at first. The chain 201 is made by linking a plurality of link modules 210 in the chain advancing direction X (although only one link module 210 is shown in Fig. 10) . This link module 210 is made by unifying the number of links 202 of first, second and third link units 221, 222 and 223 into seven sheets and by connecting the adjoining link units to each other by connecting members 220.

Here, the links 202 are arrayed in each link module 210 sequentially in the following order from one end 210a to the other end 210b of the link modules 210 with respect to the chain width direction W, if the links 202 of the first link unit 221 is expressed by "1", if the links 202 of the second link unit 222 is expressed by "2" and if the links 202 of the third link unit 223 is expressed by "3":
[1, 3, 2, 1, 3, 2, 1, 3, 2, 1, 3, 2, 1, 3, 2, 1, 3, 2, 1, 3, 2] (although the individual signs "" are omitted). In short, the array is made by repeating the pattern of "1, 3, 2" seven times. This array unifies the number of the links 202 of the individual link units 221 to 223. In the chain 301 shown in Fig. 11, moreover, the total number of the links 302 in the link modules 310 is 8 + 8 + 9 = 25. In the chain 201 of Fig. 10, however, the total number of the links 2 in the link modules 210 is 7 + 7 + 7 = 21. As compared with the aforementioned chain of JP-A-8-312725, therefore, the thickness per each link could be increased without increasing the whole width of the power transmission chain 202. With this constitution, it has been expected that the strength per link can be increased while equalizing the loads on the individual links 202, thereby to prevent the deviations of the loads and to improve the allowed transmission torque and the durability.

It is, however, found out that the power transmission chain 201 meanders in a zigzag shape when the power transmission chain 201 is driven to receive a tension from the pulleys. This is considered to come from that the links 202 are so arranged in the link modules 210 as is asymmetric with respect to the centerline A extending through the center of the chain width direction W. In this case, the distribution of the load of the connecting members 220 becomes heterogeneous with respect to the chain width direction W, and the load distribution also becomes heterogeneous between the individual connecting members 220 with respect to the chain width direction W. As a result, the loads for the individual links 202 to receive from the corresponding connecting members 220 are deviated undesirably for the improvement in the durability.

We have obtained the findings thus far described, and have further keenly investigated to conceive the invention. According to the invention, more specifically, there is provided a power transmission chain (1) comprising a plurality of link modules (40) arrayed in a chain advancing direction (X) and connected to each other, each link module (40) comprising first, second and third link units (51, 52 and 53) adjoining in the chain advancing direction (X), and connecting members (50) for connecting those link units (51, 52 and 53) to each other, and wherein each of the link units (51 to 53) includes seven links (2) arrayed in a chain width direction (W). The power transmission chain (1) is characterized in that the links (2) are arrayed in each of the link modules (40) sequentially in the following order with respect to a chain width direction (W), if the links (2) of the first link unit (51) is expressed by "1", if the links (2) of the second link unit (52) is expressed by "2" and if the links (2) of the third link unit (53) is expressed by "3":
[1, 3, 2, 2, 3, 2, 1, 3, 2, 1, 3, 2, 1, 3, 2, 1, 3, 1, 1, 3, 2].

Here, the parenthesized numerals indicate the corresponding components or the like in the later-described modes of embodiments. These indications are likewise applied to the following paragraphs.

The link modules in the invention is constituted by replacing the arrangement of the links 202 partially in each module 210 of the power transmission chain 201 shown in Fig. 10. Specifically, the link modules of the invention are constituted by interchanging the arrangement of the fourth link 202a from one end 210a in the chain width direction W and the arrangement of the fourth link 202b from the other end 210b in the chain width direction W.

In the chain 301 of the prior art, as shown in Fig. 11, the first to third link units 321 to 323 are constituted to have eight sheets - eight sheets - nine sheets, i.e., twenty five sheets. According to the invention, on the contrary, the link units have seven sheets - seven sheets - seven sheets, i.e., twenty-one sheets so that the thickness of each link can be increased without increasing the whole width of the chain. This makes it possible to enhance the strength of each link without enlarging the size of the chain. Moreover, the numbers of links of the individual link units are unified so that the loads to act on the individual links from the connecting members can be not unbalanced but made uniform among the individual link units. As a result that the array of the links is optimized, moreover, the power transmission chain can be prevented from meandering zigzag so that it runs straight, when the power transmission chain is driven to receive the tensile force from the pulleys or the like. The individual connecting members can be kept in parallel with each other. As a result, the distribution of the loads on the connecting members can be homogenized with respect to the chain width direction, and the distribution of the load with respect to the chain width direction can also be homogenized between the individual connecting members. The loads (e.g., the bending moments) to be received from the connecting members by the individual links can be made as homogenous as possible, thereby to prevent only some links from becoming earlier fatigued. It is possible to improve the durability and the allowable transmission torque of the power transmission chain.

In the invention, moreover: each of said connecting members (50) includes first and second power transmission members (3 and 4) for making rolling/sliding contacts with each other in accordance with the bend between the corresponding link units (51, 52 and 53); each of said links (2) has first and second through holes (9 and 10) arrayed in the chain advancing direction (X) ; and, in the first through hole (9), the corresponding first power transmission member (3) is loosely fitted, and the corresponding second power transmission member (4) is press-fitted and fixed, whereas, in the second through hole (10), the corresponding first power transmission member (3) is press-fitted and fixed, and the corresponding second power transmission member (4) is loosely fitted.

In this case, each link is press-fitted and fixed in the corresponding first and second power transmission members, so that the link 2 can be prevented from accidentally moving in the chain width direction with respect to the corresponding first and second power transmission members.

In the invention, moreover, the power transmission device comprises: first and second pulleys (60 and 70) each having a pair of sheave faces (62a and 63a, and 72a and 73a) of a conical shape confronting each other; and the aforementioned power transmission chain (1) wound between those pulleys (60 and 70) for transmitting a power in engagement with the sheave faces (62a and 63a, and 72a and 73a). In this case, it is possible to realize a power transmission device, which can transmit a high torque and which is excellent in the durability and compact.

### BRIEF DESCIRIPTTON OF THE DRAWINGS

Fig. 1 is a perspective view schematically showing an essential constitution of a chain type continuously variable transmission as a power transmission device, which is equipped with a power transmission chain according to one mode of embodiment of the invention.
Fig. 2 is a partially enlarged sectional view of a drive pulley (or a driven pulley) and a chain of Fig. 1.
Fig. 3 is a perspective view of an essential portion of the chain.
Fig. 4 is a sectional view taken along line IV - IV of Fig. 3.
Fig. 5 is a sectional view of an essential portion of another mode of embodiment of the invention.
Fig. 6 is a sectional view of a test example.
Fig. 7 is a sectional view of a comparison example.
Fig. 8 is a graph diagram plotting the position from the other end of a first pin of the test example and an elastic deformation.
Fig. 9 is a graph diagram plotting the position from the other end of a first pin of the comparison example and an elastic deformation.
Fig. 10 is a sectional view of an essential portion of a power transmission chain, which has been conceived by us at a midway stage before the power transmission chain according to the invention was conceived.
Fig. 11 is a sectional view of an essential portion of the power transmission chain of the prior art, as disclosed in JP-A-8-312725.

### DETAILED DESCRIPTION OF THE PREFERRED EMBODIMENTS

Preferred modes of embodiment of the invention are described with reference to the accompanying drawings.

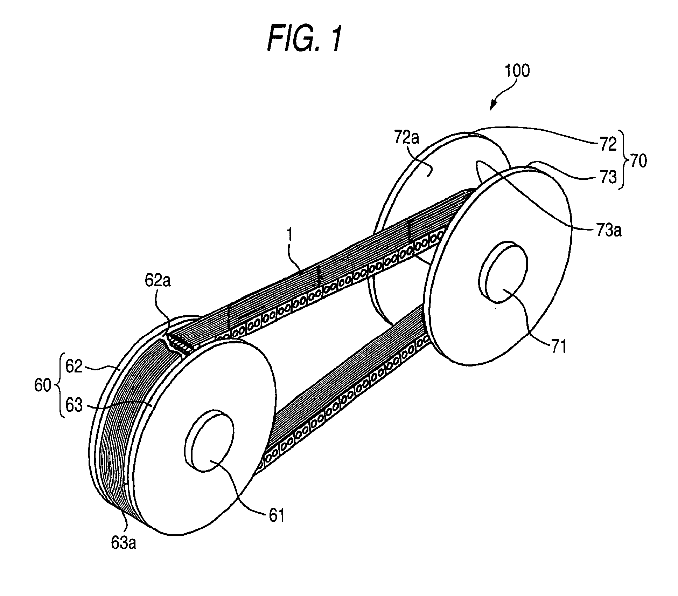

Fig. 1 is a perspective view schematically showing an essential constitution of a chain type continuously variable transmission (as will also be merely called the "continuously variable transmission") as a power transmission device, which is equipped with a power transmission chain according to one mode of embodiment of the invention. With reference to Fig. 1, a continuously variable transmission 100 is mounted on a vehicle such as an automobile, and is constituted to include: a first pulley or a drive pulley 60 made of a metal (e.g., structural steel) ; a second pulley or a driven pulley 70 made of a metal (e.g., structural steel); and an endless power transmission chain 1 (as will be merely called the "chain") wound between those two pulleys 60 and 70. Here, the chain 1 in Fig. 1 is shown so partially sectionally as can be easily understood.

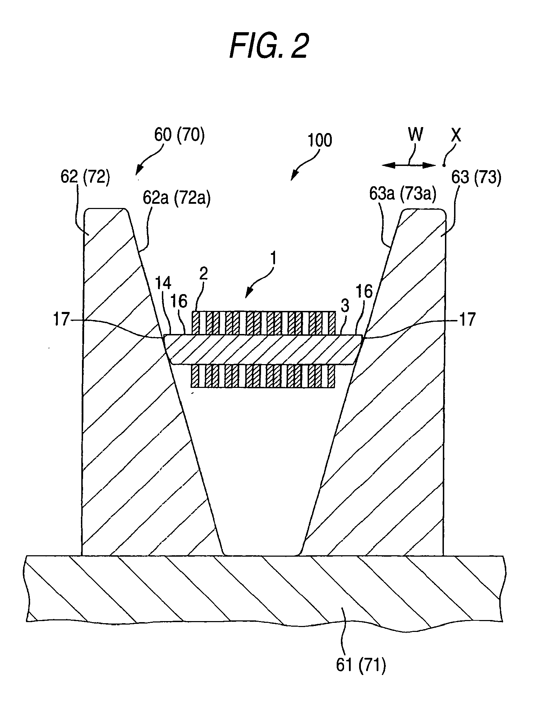

Fig. 2 is a partially enlarged sectional view of the drive pulley 60 (or the driven pulley 70) and the chain 1 of Fig. 1. With reference to Fig. 1 and Fig. 2, the drive pulley 60 is mounted integrally rotatably on an input shaft 61 connected in a power transmitting manner to the drive source of the vehicle, and is equipped with a stationary sheave 62 and a movable sheave 63. These stationary sheave 62 and movable sheave 63 have a pair of sheave faces 62a and 63a, respectively, which confront each other. The individual sheave faces 62a and 63a contain conical slopes. These sheave faces 62a and 63a define a groove, by which the chain 1 is held under a high pressure.

To the movable sheave 63, moreover, there is connected a (not-shown) hydraulic actuator for changing the groove width. At a speed changing time, the groove width is varied by moving the movable sheave 63 in the axial direction (rightward or leftward of Fig. 2) of the input shaft 61. As a result, the chain 1 is moved in the radial direction (upward or downward of Fig. 2) of the input shaft 61 so that the effective radius of the pulley 60 for the chain 1 can be varied.

On the other hand, the driven pulley 70 is mounted integrally rotatably to an output shaft 71, which leads in a power transmittable manner to the (not-shown) drive wheel, as shown in Fig. 1 and Fig. 2. Like the drive pulley 60, the driven pulley 70 is equipped with a stationary sheave 73 and a movable sheave 72, respectively, which have a pair of confronting sheave faces 73a and 72a confronting each other for forming a groove to hold the chain 1 under a high pressure.

To the movable sheave 72 of the drive pulley 70, like the movable sheave 63 of the drive pulley 60, there is connected a (not-shown) hydraulic actuator, so that the groove width is varied at a speed changing time by moving that movable sheave 72. As a result, the radius of the pulley 70 effective for the chain 1 can be varied by moving the chain 1.

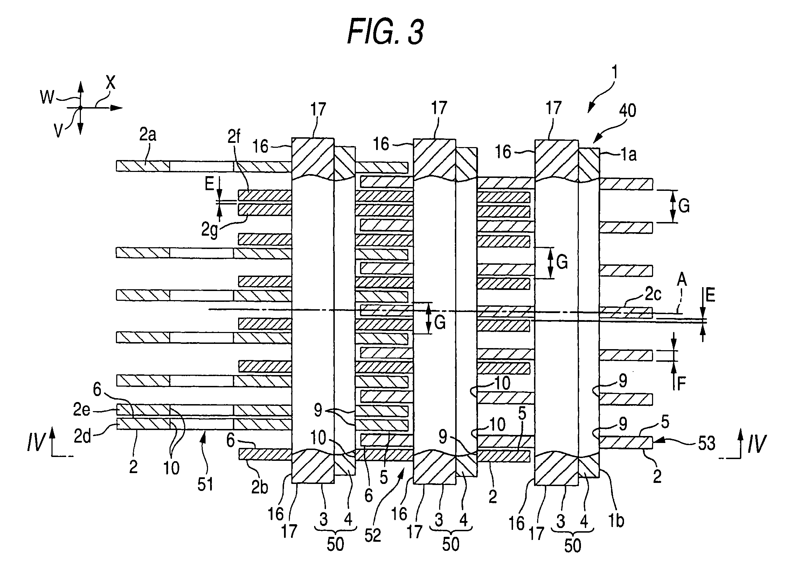

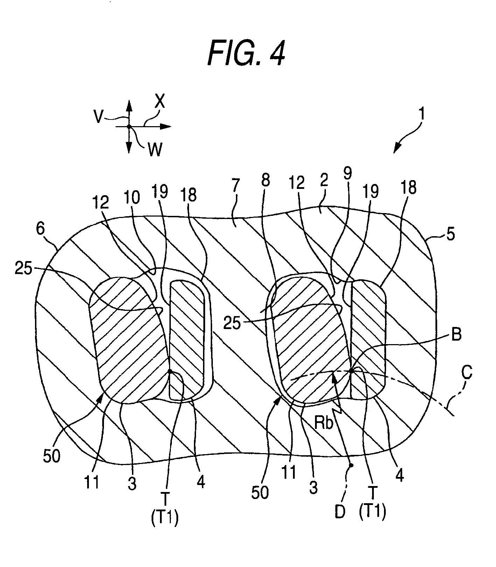

Fig. 3 is a perspective view of an essential portion of the chain 1. Fig. 4 is a sectional view taken along line IV - IV of Fig. 3. In the following, the chain 1 is described with reference to its straight area.

With reference to Fig. 3 and Fig. 4, the chain 1 is equipped with a plurality of links 2, and a plurality of connecting members 50 for connecting those links 2 in a mutually bendable manner.

In the following: the direction along the advancing direction of the chain 1 is called the chain advancing direction X ; that of the directions perpendicular to the chain advancing direction, which extends along the longitudinal direction of the connecting members 50, is called the chain width direction W; and the direction perpendicular to both the chain advancing direction X and the chain width direction W is called a the perpendicular direction V.

Each link 2 is a member formed into a sheet shape and made of a steel sheet of spring steel or carbon tool steel, and includes a front end portion 5 and a rear end portion 6 or a pair of end portions arranged ahead and behind of the chain advancing direction X, and an intermediate portion 7 arranged between those front end portion 5 and the rear end portion 6.

A front through hole 9 as a first through hole and a rear through hole 10 as a second through hole are formed in the front end portion 5 and in the rear end portion 6, respectively. The intermediate portion 7 has a pillar portion 8 for partitioning the front through hole 9 and the rear through hole 10. This pillar portion 8 has a predetermined thickness in the chain advancing direction X. Each link 2 has a peripheral edge portion formed into such a smooth curve as to hardly cause the stress concentration.

The links 2 are used to form first to third link units 51 to 53. Specifically, each of the first link unit 51, the second link unit 52 and the third link unit 53 contains a plurality of links 2 arrayed in the chain width direction W. In each of the first to third link units 51 to 53, the links 2 of one link unit are so arranged as to have the same position in the chain advancing direction X. The first to third link units 51 to 53 are arranged along the chain advancing direction X.

The links 2 of the first to third link units 51 to 53 are connected in a bendable manner to the links 2 of the corresponding first to third link units 51 to 53 by using the corresponding connecting members 50.

Specifically, the front through holes 9 of the links 2 of the first link unit 51 and the rear through holes 10 of the links 2 of the second link unit 52 are so arranged in the chain width direction W as to correspond to each other. The links 2 of the first and second link units 51 and 52 are connected to each other by the connecting members 50 inserted into the through holes 9 and 10 so that they can be bent in the chain advancing direction X.

Likewise, the front through holes 9 of the links 2 of the second link unit 52 and the rear through holes 10 of the links 2 of the third link unit 53 are so arranged in the chain width direction W as to correspond to each other. The links 2 of the second and third link units 52 and 53 are connected to each other by the connecting members 50 inserted into the through holes 9 and 10 so that they can be bent in the chain advancing direction X.

In Fig. 3, the first to third link units 51 to 53 are shown individually by only one, but are repeatedly arranged along the chain advancing direction X. Moreover, the two links 2 of the two link units adjoining to each other in the chain advancing direction X are sequentially connected by the corresponding connecting members 50 thereby to form the chain 1 in the endless shape.

The chain 1 is equipped with a link module 40 as its unit element. This link module 40 is constituted to include: the first to third link units 51 to 53; the connecting member 50 for connecting the first and second link units 51 and 52 to each other; the connecting member 50 for connecting the second and third link units 52 and 53 to each other; and the connecting member 50 for connecting the third link unit 53 to the first link unit 51 of another link module (although not shown) existing ahead in the chain advancing direction X. It can also be said that the chains 1 are constituted by connecting the link modules 40 sequentially in the chain advancing direction X.

The individual connecting members 50 are arrayed in a mutually parallel state in the chain advancing direction X. Each connecting member 50 includes a first pin 3 as a first power transmission member, and a second pin 4 as a second power transmission member, and these first and second pins 3 and 4 are paired with each other. These paired first and second pins 3 and 4 make a rolling/sliding contact with each other as the corresponding links 2 are bent. The rolling/sliding contact is the contacting state containing at least one of the rolling contact and the sliding contact.

The first pin 3 is a long member elongated in the chain width direction W, and its periphery 11 extends in parallel with the chain width direction W.

The periphery 11 is formed into a smooth face, and has a front portion 12 as a confronting portion facing the front of the chain advancing direction X. The front portion 12 confronts the second pin 4 paired, and makes the rolling/sliding contact at a contacting portion T (or a contacting point, as viewed in the chain width direction W) with the later-described rear portion 9 of the second pin 4.

A pair of end portions 16 in the longitudinal direction (or in the chain width direction W) of the first pin 3 are individually protruded in the chain width direction W from those links 2a and 2b of the links 2 of the link module 40, which are arranged at one pair of end portions of the chain width direction W. Those paired end portions 16 are individually formed with end faces 17 as a pair of power transmission portions.

As referred to Fig. 2 and Fig. 3, the paired end faces 17 are made to frictionally contact (or engage) with the corresponding sheave faces 62a and 63a, and 72a and 73a of the individual pulleys 60 and 70.

The first pins 3 are clamped between the corresponding sheave faces 62a and 63a, and 72a and 73a so that the power is transmitted between the first pins and the individual pulleys 60 and 70. The first pins 3 are made of a highly strong wear resisting material such as bearing steel (SUJ2) so that their end faces 17 may contribute to direct power transmissions.

As again referred to Fig. 3 and Fig. 4, the second pins (as also called the "strips" or "inter-pieces") are long members made of a material similar to that of the first pins 3 and extending in the chain width direction W.

The second pins 4 are made so shorter than the first pins 3 that their paired end portions may not contact with the sheave faces of the individual pulleys, and are arranged ahead of the pairing first pins 3 in the chain advancing direction X. In connection with the chain advancing direction X, the second pins 4 are made thinner than the first pins 3. Alternatively, the second pins 4 may be able to contact with the sheave faces of the individual pulleys.

The second pin 4 has its periphery 18 extending in the chain width direction W. This periphery 18 is formed into a smooth face, and has a rear portion 19 as an opposite portion confronting backward in the chain advancing direction X. The rear portion 19 is formed into a flat face normal to the chain advancing direction X, and confronts the front portion 12 of the pairing first pin 3.

The chain 1 is the so-called "press-fit type chain". In the front through hole 9 of each link 2, more specifically, the corresponding first pin 3 is loosely fitted, and the corresponding second pin 4 is press-fitted and fixed. In the rear through hole 10 of each link 2, the corresponding first pin 3 is press-fitted and fixed, and the corresponding second pin 4 is loosely fitted.

In the constitution thus described, the front portion 12 of the first pin 3 and the rear portion 19 of the second pin 4 make the rolling/sliding contact with each other on the contacting portion T as the links 2 adjoining in the chain advancing direction X are bent. Here, the individual first and second pins 3 and 4 may also be loosely fitted in the corresponding front through hole 9 and rear through hole 10.

On the other hand, the chain 1 is the chain of the so-called "involute type". Specifically, a curved portion 25 is formed at the front portion 12 of the first pin 3. The end portion of the curved portion 25 on the radially inner chain side is used as a predetermined starting portion B. (i.e., a predetermined starting point, as viewed in the chain width direction W).

The position of the starting portion B is located at a contacting portion T1, i.e., at the contacting portion T of the first pin 3 in the straight region of the chain 1. This starting portion B is arranged in the front portion 12 and close to the radially inner chain side.

As viewed in the chain width direction W, the curved portion 25 is formed of an involute curve having a predetermined starting portion B (or starting point) . This involute curve has a base circle C having a center D and a radius Rb (e.g., a base circle radius of 100 mm, for example).

The center D is located in a plane normal to the chain advancing direction X and containing the contacting portion T1 of the first pin 3, and is located closer to the radially inner chain side than the contacting portion T1. The base circle C and the starting portion B intersect with each other.

By the constitution thus far described, as viewed in the chain width direction W, the moving locus of the contacting portion T, as accompanying the bend between the corresponding links 2, is the involute curve having the starting portion B with reference to the first pin 3. Specifically, the curved portion 25 of the first pin 3 is formed into the involute curve, as viewed in the chain width direction W, so that the moving locus of the contacting portion T is the involute curve.

As viewed in the chain width direction W, the curved portion 25 of the first pin 3 may be formed into a curve (e.g., a curve having one or more radii of curvature) other than the involute curve.

This mode of embodiment is characterized: in that each of the first to third link units 51 to 53 includes seven links 2; and in that the links 2 are arrayed in each link module 40 sequentially in the following order at a clearance E inbetween from one end 1a to the other end 1b of the chain 1 with respect to the chain width direction W, if the links 2 of the first link unit 51 is expressed by "1", if the links 2 of the second link unit 52 is expressed by "2'' and if the links 2 of the third link unit 53 is expressed by "3":
[1, 3, 2, 2, 3, 2, 1, 3, 2, 1, 3, 2, 1, 3, 2, 1, 3, 1, 1, 3, 2] (although the individual signs "" are omitted).

The aforementioned array is expressed, if divided by three links, in the following manner:
[1,3, 2], [2, 3, 2], [1, 3,2], [1, 3, 2], [1, 3, 2], [1,3,1], [1, 3, 2].

This array corresponds to that which is made by interchanging the fourth "1" from one end in the chain width direction and the fourth "2" from the other end in the chain width direction with each other, in the following array, in which the array of "1, 3, 2" is repeated seven times from one end in the chain width direction:
[1, 3, 2], [1, 3, 2], [1, 3, 2], [1, 3, 2], [1, 3, 2], [1, 3, 2], [1, 3, 2].

The individual links 2 of the link module 40 are arrayed asymmetrically, as viewed in its entirety, with respect to a center line A extending in the chain advancing direction and passing through the center of the chain width direction W. In each of the first and second link units 51 and 52, the links 2 are arrayed asymmetrically with respect to the center line A. In the third link unit 53, the links 2 are arrayed symmetrically with respect to the center line A. In the third link unit 53, a link 2c at the center of the chain width direction W overlaps the center line A.

In the first link unit 51, a link 2d on the other end 1b of the chain width direction W is adjacent to a link 2e of the first link unit 51. These two links 2d and 2e confront each other directly not through the links 2 of the remaining link units 52 and 53.

In the second link unit 52, a link 2f on the one end 1a of the chain width direction W is adjacent to a link 2g of the second link unit 52. These two links 2f and 2g confront each other directly not through the links 2 of the remaining link units 51 and 53.

The individual links 2 have a thickness F set to an equal value. This thickness F is preferably set within a range of 0.7 mm to 2.0 mm, for example.

This is because the strength for each link is hard to retain sufficient, if the thickness F is less than 0.7 mm, whereas each link 2 is so thick as to enlarge the whole width of the chain 1 excessively, if the thickness F exceeds 2.0 mm.

The clearance E is set to an equal value between any individual links 2 adjoining in the chain width direction W. This clearance E is preferably set between 0 mm to 0.04 mm, for example.

This is because the contact pressure between the adjoining likes 2 is so high as to lower the efficiency, if the clearance is less than 0 mm, whereas the whole width of the chain 1 is excessively large, if the clearance E exceeds 0.04 mm.

The chain 1 having the schematic constitution thus far described is subjected to tensions along the chain advancing direction X by the engagement between the individual first pins 3 and the individual pulleys 60 and 70, as shown in Fig. 2 and Fig. 3. Those tensions act on the individual connecting members 50 and the individual links 2. These individual connecting members 50 apply the tensions to the individual links 2 of the corresponding link units 51, 52 and 53.

According to this mode of embodiment, as has been described hereinbefore, it is possible to attain the following advantages. In the chain 301 of the prior art, as shown in Fig. 11, the first to third link units 321 to 323 are constituted to have eight sheets - eight sheets - nine sheets, i.e., twenty five sheets. According to this mode of embodiment shown in Fig. 3, on the contrary, the link units have seven sheets - seven sheets - seven sheets, i.e., twenty one sheets so that the thickness of each link can be increased without increasing the whole width of the chain 1. This makes it possible to enhance the strength of each link 2 without enlarging the size of the chain 1.

Moreover, the numbers of links of the individual link units 51, 52 and 53 are unified so that the loads to act on the individual links 2 from the connecting members 50 can be not unbalanced but made uniform among the individual link units 51, 52 and 53.

As a result that the array of the links 2 is optimized, moreover, the chain 1 can be prevented from meandering zigzag so that it runs straight, when the chain 1 is driven to receive the tensile force from the individual pulleys 60 and 70. The individual connecting members 50 can be kept in parallel with each other. As a result, the distribution of the loads on the connecting members 50 can be homogenized with respect to the chain width direction W, and the distribution of the load with respect to the chain width direction W can also be homogenized between the individual connecting members 50. The loads (e.g., the bending moments) to be received from the connecting members 50 by the individual links 2 can be made as homogenous as possible, thereby to prevent only some links 2 from becoming earlier fatigued. It is possible to improve the durability and the allowable transmission torque of the chain 1.

In the front through hole 9, moreover, the corresponding first pin 3 is loosely fitted, and the corresponding second pin 4 is press-fitted and fixed. In the rear through hole 10, the corresponding first pin 3 is press-fitted and fixed, and the corresponding second pin 4 is loosely fitted. As a result, each link 2 is press-fitted and fixed in the corresponding first and second pins 3 and 4, so that the link 2 can be prevented from accidentally moving in the chain width direction W with respect to the corresponding first and second pins 3 and 4. Moreover, a clearance G between the links 2 belonging to the common link unit and adjoining to each other in the chain width direction W can be kept at a constant value.

Moreover, when the individual end faces 17 of each first pin 3 contact with the corresponding sheave faces 62a and 63a, and 72a and 73a of the individual pulleys 60 and 70, the pairing second pin 4 makes the rolling/sliding contact with the first pin 3 so that the links 2 can be bent from each other.

At this time, between the pairing first and second pins 3 and 4, the mutually rolling contact component is much, but the mutually sliding contact component is extremely little. As a result, the individual end faces 17 of each first pin 3 contacts substantially irrationally with the corresponding sheave faces 62a and 63a, and 72a and 73a, so that the frictional loss can be reduced to retain a high transmission efficiency.

Moreover, the moving locus of the movement of the contacting portion T with respect to the first pin 3 is made to draw the involute curve, as viewed in the chain width direction W. As a result, a chord motion of the chain 1 can be suppressed when the individual first pins 3 are sequentially bitten by the individual pulleys 60 and 70. This makes it possible to make the noises of the chain 1 less at the driving time.

At the time of manufacturing the chain 1, moreover, there is performed a work, in which a predetermined tensile force (or a pretension) is applied to the chain 1, after assembled, to deform each link 2 plastically a little thereby to enhance the hardness of each like 2. At this time, the individual links 2 can be homogeneously loaded so that they can be equivalently strengthened.

In the chain 301 of the prior art, as shown in Fig. 11, the link numbers of the first to third link units 321 to 323 are eight sheets - eight sheets - nine sheets. If one link of this case has a thickness of about 0.8 mm in this case, the total thickness of the link in the chain width direction W is 0.8 x (8 + 8 + 9) = 20 mm. On the other hand, the strength of the chain 301 is determined with reference to the first and second link units 51 and 52 of a relatively smaller link sheets. At this time, the effective thickness of the link for the strength of the chain 301 is 0.8 mm x 8 = 6.4 mm.

In the chain 1 of this embodiment shown in Fig. 3, on the contrary, the link module 40 is made such that each of the link units 51 to 53 has a link numbers of seven sheets - seven sheets - seven sheets. If one link of this case has a thickness of about 1.0 mm in this case, the total thickness of the link in the chain width direction W is 1.0 x (7 + 7 + 7) = 21 mm. Moreover, the effective thickness of the link for the strength of the chain 1 is 1.0 mm x 7 = 7 mm.

In the chain of this mode of embodiment, as compared with the aforementioned chain of the prior art, the total thickness of the links 2 in each link module 40 is 21 mm/20 mm = 1.050, that is, has an increase of only 5 %, but the effective thickness is 7 mm/6.4 mm ≡ 1.094, that is, has an increase as high as about 10 %. Without a substantial increase in the total thickness of the link 2, therefore, it is possible to improve the effective thickness, i.e., the thickness for the strength of the chain 1. Moreover; the number of the links 2 to be contained in each link module 40 can be reduced to reduce the number of parts.

Thus, it is possible to realize a continuously variable transmission 100, which is excellent in durability, quietness and transmission efficiency and which is compact but can transmit a high torque.

Here, the link 2 of the link module 40 is arranged asymmetrically with respect to the center line A so that the bending moment rises between the corresponding link units 51, 52 and 53 of the chain 1. By making the chain 1 endless, however, the bending moment is balanced in the entire chain.

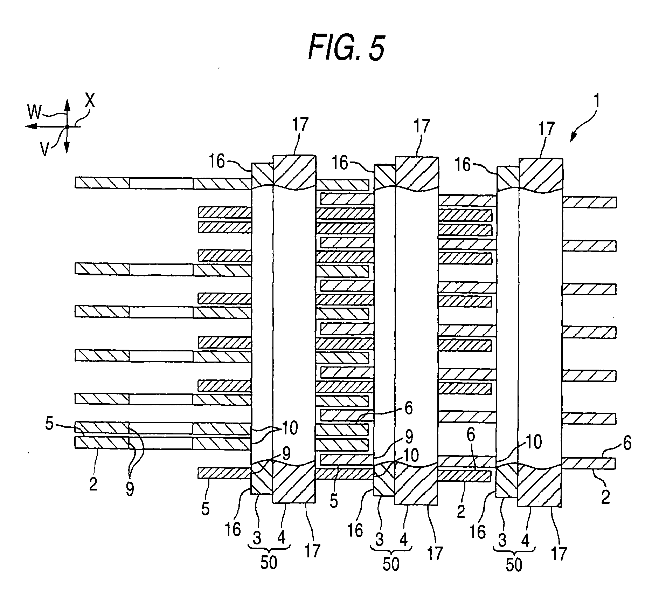

The present invention is not limited to the aforementioned mode of embodiment, but can be modified in various manners within the scope of the claim. As shown in Fig. 5, for example, the chain advancing direction X for the chain 1 can also be inverted without changing the array pattern of the link 2 of each link module 40.

Alternatively, the corresponding first and second pins 3 and 4 press-fitted and fixed in the front through hole 9 and the rear through hole 10 may also be loosely fitted in the front through hole 9 and the rear through hole 10.

Moreover, the invention may also be applied to the power transmission chain of the so-called "block type", in which members having power transmission portions like the end faces of the first pin are arranged individually near the paired longitudinal end portions of that first pin.

Alternatively, the arrangements of the front through hole 9 and the rear through hole 10 of each link 2 may be interchanged from each other. At each link 2, moreover, a communication groove (or slit) may also be formed in the pillar portion 8 between the front through hole 9 and the rear through hole 10. This slit may be either smaller than or equal to the height of the through hole. The rigidity of the link is increased, if the height is small, but the elastic deformation (or flexibility) can be increased, if the height is large, to reduce the stress to be established in the link. These modifications may be suitably made according to the load conditions.

Moreover, the invention should not be limited to the mode, in which the groove widths of both the drive pulley and the driven pulley 70 fluctuate, but may also be modified such that only the groove width of one fluctuates whereas the other has a fixed width having no fluctuation. Moreover, the invention has been described on the mode, in which the groove width fluctuates continuously (with no step), but may also be applied to another power transmission device of another type, in which the groove width stepwise fluctuates or is fixed (to cause no speed change).

### [Example]

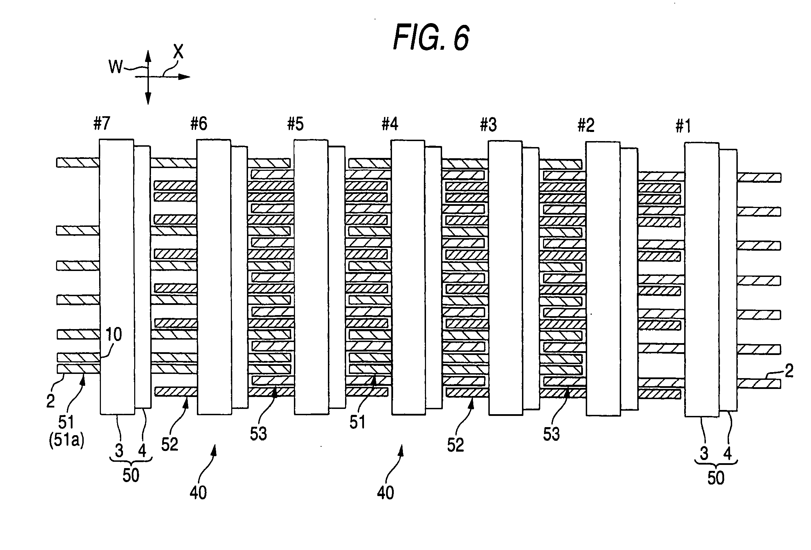

Test Example: A test example, as shown in Fig. 6, was created as the analysis model of a finite element method over a computer. This test example corresponds to one set, which was prepared by connecting the two link modules 40 shown in Fig. 3 and by inserting the connecting members 50 into the rear through holes 10 of the links 2 of that first link unit 51a of the link modules 40 and 40 of the one set, which was located on the most upstream side in the chain advancing direction X.

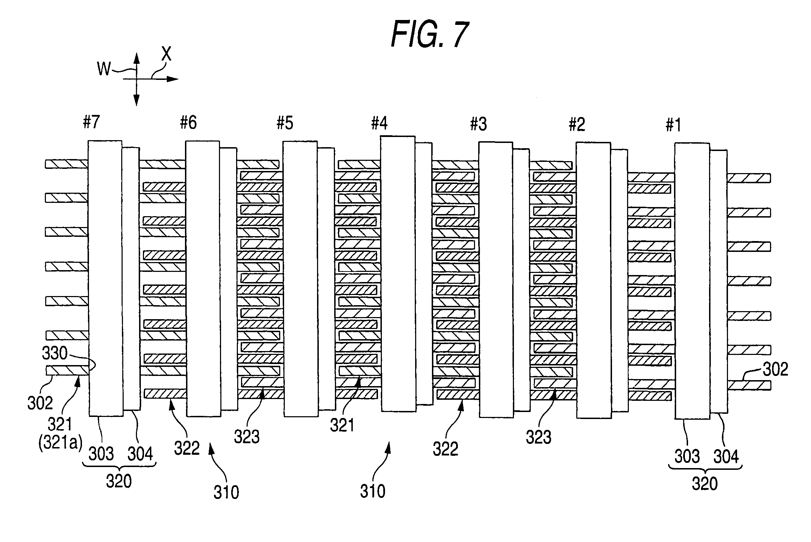

Comparison: A comparison, as shown in Fig. 7, was created as the analysis model of the finite element method over the computer. This comparison corresponds to one set, which was prepared by connecting the two link modules 310 shown in Fig. 10 and by inserting the connecting members 320 into the rear through holes 330 of the links 302 of that first link unit 321a of the link modules 310 and 310 of the one set, which was located on the most upstream side in the chain advancing direction X.

With reference to Fig. 6 and Fig. 7, individually in the test example and the comparison, the first pins 3 and 303 of the connecting members 50 and 320 are designated by identification signs of #1, #2, #3, #4. #5, #6 and #7 sequentially from the downstream side of the chain advancing direction X. The major dimensions of those individual test example and comparison were, as follows.
Material of Links 2 and 302:
   Steel
Thickness of Links 2 and 302:
   0.8 mm
Material of First and Second Pins 3, 4, 303 and 304:
   Steel, and
Length and Thickness of First Pins 3 and 303:
   2 5 mm and 3 mm

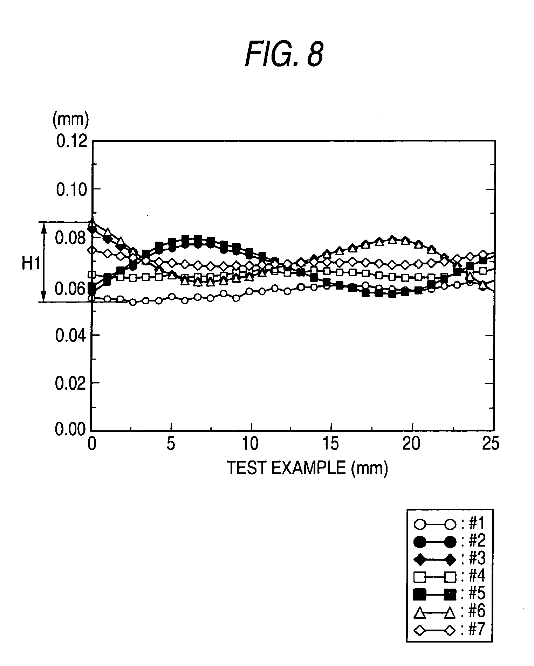

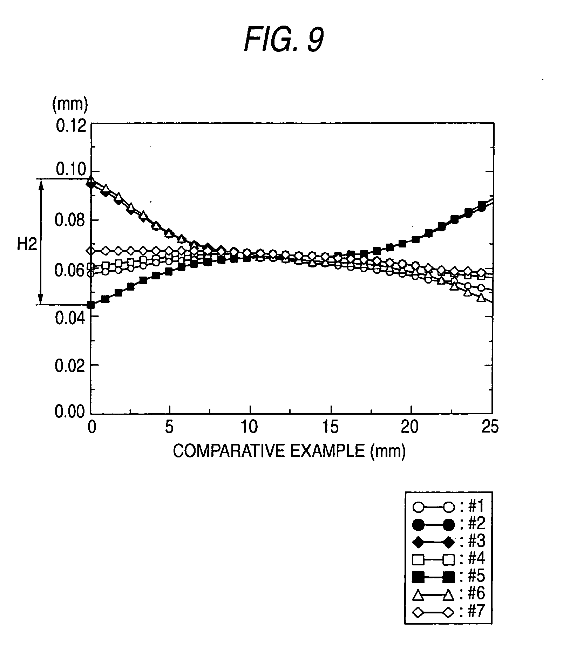

The test example and the comparison were analyzed under the condition to apply a tensile load of 16 kN. The elastic deformations of the individual first pins 3 and 303 in the chain advancing direction X were determined with reference to the state before the tensile loads had been applied. The results are tabulated in Fig. 8 and Fig. 9.

In Fig. 8 and Fig. 9, the abscissa indicates the positions of the first pins 3 and 303 with reference (at 0 mm) of the other end side (i.e., the lower side in Fig. 6 and Fig. 7) in the chain width direction W. The ordinate indicates the elastic deformations of the first pins 3 and 303 in the chain advancing direction X.

In the test example, as shown in Fig. 8, the difference H1 between the upper limit and the lower limit of the elastic deformation of the first pin 3 is as small as about 0.03 mm. Therefore, it can be said that the individual first pins 3 of #1 to #7 are arranged generally in parallel so that the deviations of the loads to act on the links 2 are small.

In the comparison example, as shown in Fig. 9, the difference H2 between the upper limit and the lower limit of the elastic deformation of the first pin 303 is as large as about 0.05 mm. In other words, the difference H2 is larger by 60 % than the difference H1 in the test example. Therefore, it cannot be said that the individual first pins 3 and 303 of #1 to #7 are arranged generally in parallel, so that the deviations of the loads to act on the links 302 are large.

Thus, it has been verified in the test example that the individual first pins 3 are arranged in parallel so that a uniform load can be uniformly applied to the individual links 2. In other words, it has been verified that only some links 2 are not fatigued earlier so that the torque can be transmitted while retaining a high durability.

## Claims

1. A power transmission chain comprising a plurality of link modules arrayed in a chain advancing direction and connected to each other, each link module comprising :
first, second and third link units adjoining in the chain advancing direction, and
connecting members for connecting the link units to each other, and
wherein each of the first, second and third link units includes seven links arrayed in a chain width direction, and
the links are arrayed in said link module sequentially in the following order along the chain width direction, if the links of the first link unit is expressed by "1", if the links of the second link unit is expressed by "2" and if the links of the third link unit is expressed by "3":
[1, 3, 2, 2, 3, 2, 1, 3, 2, 1, 3, 2, 1, 3, 2, 1, 3, 1, 1, 3, 2].

2. A power transmission chain in claim 1, wherein each of said connecting members includes first and second power transmission members for making rolling/sliding contacts with each other in accordance with bending between the corresponding link units;
each of said links has first and second through holes arrayed in the chain advancing direction; and
the corresponding first power transmission member is loosely fitted, and the corresponding second power transmission member is press-fitted and fixed in the first through hole, and
the corresponding first power transmission member is press-fitted and fixed, and the corresponding second power transmission member is loosely fitted in the second through hole.

3. A power transmission device comprising:
first and second pulleys each having a pair of sheave faces of a conical shape confronting each other; and
a power transmission chain as set forth in claim 1 and wound between those pulleys for transmitting a power in engagement with the sheave faces.
